# EUROPÄISCHE PATENTSCHRIFT

(11) **EP 1 273 518 B1**
(45) Veröffentlichungstag und Bekanntmachung des Hinweises auf die Patenterteilung: **24.11.2004**
(21) Anmeldenummer: 02013852.5
(22) Anmeldetag: 22.06.2002
(51) Int. Cl.: B64G 1/10, B64G 1/24, G01S 13/90, G01S 13/87

(54) **Satellitenkonfiguration zur interferometrischen und/oder tomografischen Abbildung der Erdoberfläche mittels Radar mit synthetischer Apertur**
Satellite configuration for interferometric and/or tomographic imaging of the earth's surface using synthetic aperture radar
Configuration de satellites d'imagerie interférométrique et/ou tomographique de la surface terrestre avec radar d'aperture synthétique

(30) Priorität: 05.07.2001 DE 10132723
(43) Veröffentlichungstag der Anmeldung: 08.01.2003
(73) Patentinhaber: Deutsches Zentrum für Luft- und Raumfahrt e.V., 51147 Köln (DE)
(72) Erfinder: Moreira, Alberto, Dr.-Ing., 82140 Olching (DE); Krieger, Gerhard, Dr.-Ing., 82152 Planegg (DE); Mittermayer, Josef, Dr.-Ing., 81249 München (DE)
(74) Vertreter: von Kirschbaum, Albrecht, Dipl.-Ing.

(56) Entgegenhaltungen:
- EP-A- 1 065 518
- WO-A-99/58997
- FR-A- 2 787 185
- VINCENT M A: "Design of the TOPSAT Mission" AAS/AIAA ASTRODYNAMICS CONFERENCE, Bd. 85, Nr. 1, 1993, Seiten 1137-1146, XP008012281
- MASSONNET D: "Capabilities and Limitations of the Interferometric Cartwheel" IEEE TRANSACTIONS ON GEOSCIENCE AND REMOTE SENSING, Bd. 39, Nr. 3, März 2001 (2001-03), Seiten 506-520, XP001133712
- ZEBKER H A ET AL: "MAPPING THE WORLD'S TOPOGRAPHY USING TADAR INTERFEROMETRY: THE TOPSAT MISSION" PROCEEDINGS OF THE IEEE, IEEE. NEW YORK, US, Bd. 82, Nr. 12, 1. Dezember 1994 (1994-12-01), Seiten 1774-1786, XP000492720 ISSN: 0018-9219
- PATENT ABSTRACTS OF JAPAN vol. 018, no. 078 (P-1689), 8. Februar 1994 (1994-02-08) & JP 05 288843 A (NEC CORP), 5. November 1993 (1993-11-05)

## Beschreibung

Die Erfindung betrifft eine Satellitenkonfiguration für ein Radarsystem mit synthetischer Apertur zur interferometrischen und/oder tomographischen Abbildung der Erdoberfläche unter Verwendung eines satellitengetragenen Senders und mehrerer jeweils einen Empfänger tragenden Empfängersatelliten, die sich auf jeweils einem Orbit bei über den Orbitumlauf variierendem horizontalen Across-Track-Versatz bewegen und von denen einer auch den Sender tragen kann.

Aus dem Artikel " Design of the TOPSAT Mission" von Vincent M.A., AAS/AIAA ASTRODYNAMICS CONFERENCE; Bd. 85, Nr. 1, 1993, Seiten 1137 - 1146, ist eine Satellitenkonfiguration zur interferometrischen Abbildung der Erdoberfläche mittels eines Radarsystems mit synthetischer Apertur (SAR) bekannt. In dieser Satellitenkonfiguration sind zwei sich in gleicher Orbithöhe mit gleicher Geschwindigkeit bewegende Empfangssatelliten mit horizontalem Across-Track-Versatz ("Baseline distance") und horizontalem über den Orbit konstant bleibendem Along-Track-Abstand zueinander zur Kreuzpunktvermeidung vorgesehen. Die "Baseline distance", die als Komponente der Satellitentrennung senkrecht zur Geschwindigkeit definiert ist, variiert über den Orbit. Eine für interferometrische Abbildung ausreichende "Baseline distance" wird durch die aus dem vorstehend angeführten Artikel bekannte Satellitenkonfiguration nur bis zu einer geometrischen Breite von etwa 65° erreicht, also nicht über den gesamten Orbit.

Bei einer Konfiguration aus mehreren Radarsatelliten liegt ein Problem darin, eine für die Interferometrie wichtige Baseline möglichst stabil über einen gesamten Orbit zu halten. Als Baseline wird der Abstand zwischen zwei Empfangssatelliten bezeichnet, wobei zwischen Across-Track und Along-Track Baseline unterschieden wird. Erstere verläuft senkrecht zum Geschwindigkeitsvektor, dient zur Vermessung der Geländehöhe auf der Erdoberfläche und trägt durch den Anteil, welcher normal auf der Verbindungslinie zwischen Antenne und Zielpunkt steht, zur Höhenvermessung bei. Die Along-Track Baseline bezeichnet den Abstand zweier Empfangssatelliten in Richtung des Geschwindigkeitsvektors (R. Scheiber et al., "Overview of interferometric data acquisition and processing modes of the experimental airborne SAR system of DLR", Proc. IGARSS'99, Hamburg, Germany, June 1999, pp. 35-38).

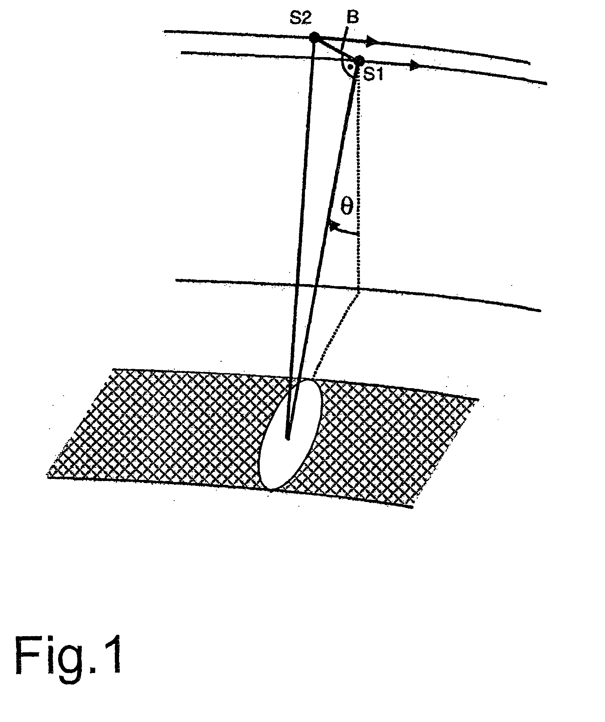

Nachfolgend wird eine Einführung in SAR-Systeme gegeben, die anschließend auf interferometrische SAR-Systeme erweitert wird. Radar mit synthetischer Apertur SAR (Synthetic Aperture Radar) ist ein Instrument zur Fernerkundung, welches in immer größerem Maße Einsatz bei der Abbildung, Überwachung und Untersuchung der Erdoberfläche findet. Ein solches System besteht aus einem sich mit konstanter Geschwindigkeit bewegenden Träger, einer orthogonal zur Bewegungsrichtung blickenden Antenne und einem kohärenten Radarsystem, welches periodisch elektromagnetische Impulse sendet. Die Bewegungsrichtung des Trägers wird als Azimutrichtung bezeichnet, die dazu orthogonale, schräg nach unten weisende Richtung, als Entfernungsrichtung. In Fig.1 ist ein interferometrisches SAR-System mit zwei Satelliten S1 und S2 mit der Baseline B dargestellt. Mit Θ ist der Blickwinkel bezeichnet. Ein konventionelles SAR-System besteht nur aus einem Träger, z.B. einem Satelliten. In Fig.1 wird ein abzubildender Streifen vom SAR-Satelliten S1 überflogen. Hierbei wird ein in Azimut- und Entfernungsrichtung hochauflösendes Abbild des Rückstreukoeffizienten des Streifens durch Signalverarbeitung der beim Überflug aufgezeichneten Rohdaten erstellt.

Das aus einem Träger (Satelliten, z.B. S1) bestehende SAR-System ist durch einen zweiten Satelliten (S2) zu einem interferometrischen System ausgebaut. Das Prinzip der Interferometrie ist es, durch Messung des Phasenunterschieds von zwei aus unterschiedlichen Perspektiven aufgenommenen SAR-Bildern zusätzliche Information zu gewinnen, mit der beispielsweise auf die relative Höhendifferenz aller im Streifen enthaltenen Ziele zurückgeschlossen werden kann. Der Phasenunterschied ist eine Folge der leicht unterschiedlichen Entfernungen zwischen Ziel und den beiden Antennen.

Für die Genauigkeit der Höhenmessung ist die sogenannte Baseline entscheidend. In Fig.1 ist die Baseline als die Verbindungslinie zwischen S1 und S2 dargestellt. In Fig.1 ist genau der Fall dargestellt, bei dem die Baseline senkrecht zum Geschwindigkeitsvektor der Satelliten von S1 und normal zur Verbindungslinie zwischen den Satelliten S1 und einem Ziel am Boden steht. Diese Baseline wird als normale Baseline bezeichnet; sie ist entscheidend für die Höhenmessung. Befinden sich zwei Satelliten in exakt der gleichen Höhe, an der gleichen Azimutposition und auf parallelen Orbits, so trägt nur die resultierende normale Baseline zur Höhenmessung bei. Das gleiche gilt für zwei Satelliten, welche genau übereinander fliegen, und so eine vertikale Baseline bilden. Hier trägt ebenfalls nur die normale Baseline zur Höhenmessung bei. Das Endprodukt der Höhenmessung ist ein sogenanntes digitales Höhenmodell (Digital Elevation Model DEM).

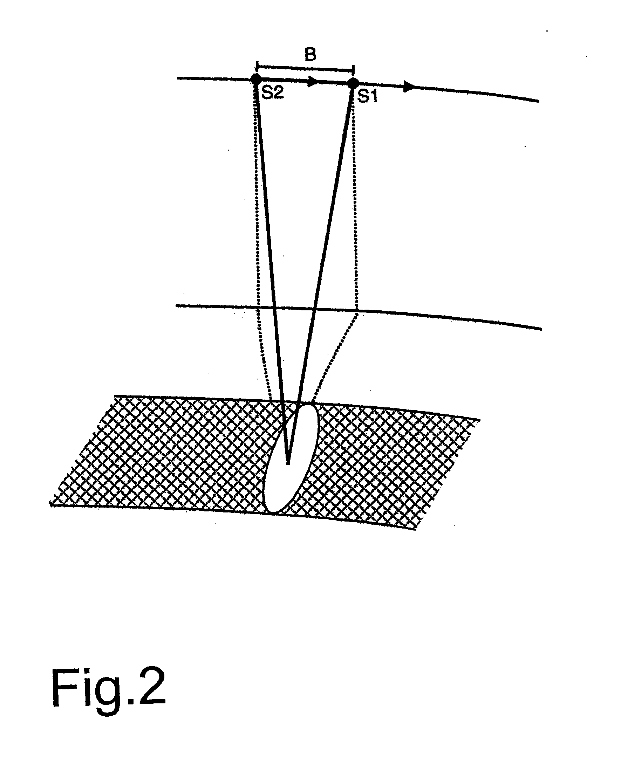

In Fig.2 ist ein interferometrisches System für Along-Track Interferometrie gezeigt. Bei dieser Anordnung befinden sich die beiden Satelliten S1 und S2 auf dem gleichen Orbit mit einem kleinen Versatz in Flugrichtung. Falls sich die Satelliten auf unterschiedlichen Orbits befinden, ist Along-Track Interferometrie ebenfalls möglich. Bei jeder Konstellation ist aber nur der Versatz der beiden Satelliten in Flugrichtung entscheidend. Die Along-Track Interferometrie wird zur Geschwindigkeitsmessung und zur Detektion von sich bewegenden Zielen eingesetzt. Ein typisches Anwendungsbeispiel für Along-Track Interferometrie ist die Beobachtung von Oberflächenströmungen.

Es gibt prinzipiell zwei Möglichkeiten, um eine interferometrische Anordnung aus mindestens zwei Satelliten aufzubauen, nämlich die Multi-Pass und die Single- bzw. Einpass-Interferometrie. Bei der Multi-Pass Interferometrie wird das zu beobachtende Gebiet mit einem SAR-Sensor zeitlich versetzt überflogen mit leicht unterschiedlicher Flugbahn, je nach Anforderung für die Along- oder Across-Track Interferometrie. Multi-Pass Interferometrie wird zum Beispiel mit dem ERS-1 Satelliten erfolgreich durchgeführt.

Für die Einpass-Interferometrie werden mindestens zwei SAR-Sensoren benötigt und das zu beobachtende Gebiet wird von beiden Sensoren gleichzeitig abgebildet. Der Vorteil der Einpass-Interferometrie liegt darin, daß sich das zu beobachtende Gebiet zwischen den einzelnen SAR-Abbildungen nicht verändert. Dies garantiert eine hohe Kohärenz zwischen den beiden interferometrischen Datensätzen.

Der Nachteil der Einpass-Interferometrie besteht darin, daß mehrere SAR-Sensoren notwendig sind, was in der Regel zu höheren Kosten führt. Anstelle von zwei Satelliten kann auch eine starre Konstruktion mit genügend langer Baseline zwischen den SAR-Antennen verwendet werden. Diese Realisierung wurde bei der SRTM-Mission angewendet.

Eine weitere Realisierung des interferometrischen Prinzips stellt das interferometrische Cartwheel dar, (WO 99/58997 von D. Massonnet "Roue interférometrique"), bei welcher mehrere Satelliten durch eine leicht unterschiedliche Exzentrizität bei einem Umlauf eine Umdrehung um ein virtuelles Cartwheel-Zentrum beschreiben. Die vorgesehene Konfiguration besteht beispielsweise aus drei Empfangssatelliten, die zusammen das Cartwheel bilden, und einem beliebigen SAR-Sender, welcher insbesondere ein schon vorhandener SAR-Sensor sein kann.

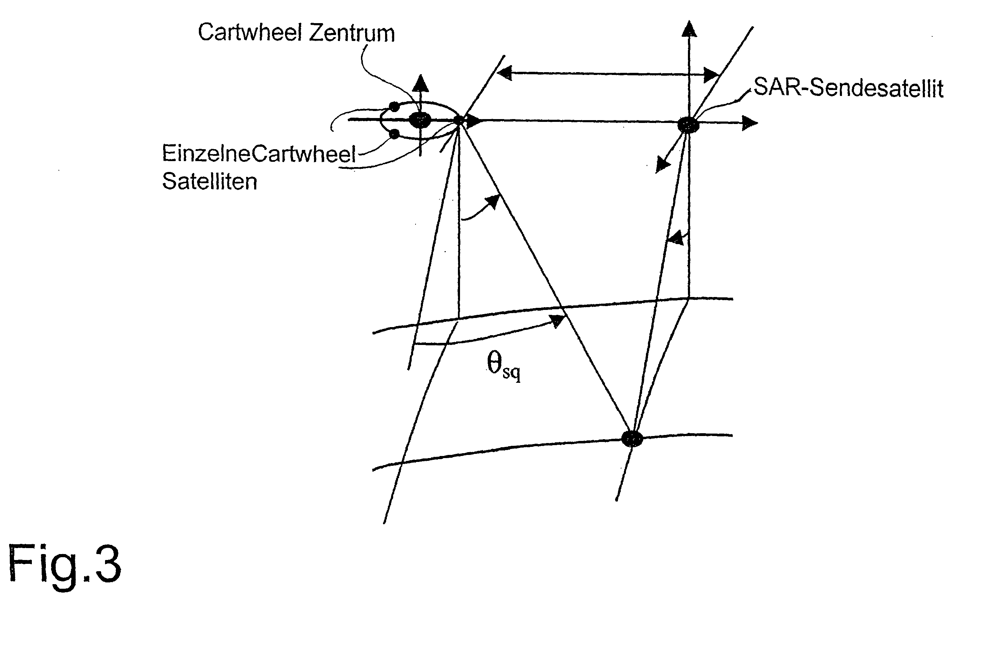

In Fig.3 ist eine solche Cartwheel-Konfiguration dargestellt, wobei mit Θ_{sq} der bistatische Squintwinkel bezeichnet ist. Während eines Orbits beschreiben die einzelnen Cartwheel-Satelliten eine komplette Ellipse um das Cartwheel-Zentrum. Dabei treten zwischen den einzelnen Cartwheel-Satelliten sowohl Across-Track (vertikale) als auch Along-Track-Baselines auf. Je nach gewünschter Anwendung können aus den SAR-Empfangssatelliten diejenigen ausgewählt werden, welche für eine Anwendung am günstigsten sind.

Für Across-Track-Interferometrie werden beispielsweise immer diejenigen Satelliten ausgewählt, welche die größte vertikale (Across-Track) Baseline zur Verfügung stellen. Für Along-Track-Interferometrie werden immer diejenigen Satelliten ausgewählt, welche die größte Along-Track Baseline zur Verfügung stellen. Es können auch alle auftretenden Along-Track-Baselines kombiniert werden, um die Performance der Along-Track-Interferometrie zu verbessern. Das gleiche gilt auch für die Across-Track-Interferometrie.

Ein Nachteil des Cartwheel besteht darin, daß es nicht gleichzeitig für Along- und Across-Track Interferometrie optimiert werden kann. Vorteilhaft ist, daß die aus einem Satz Empfangssatelliten ausgewählten maximalen Baselines (Along oder Across, je nach Cartwheel-Ausprägung) über den gesamten Orbit sehr stabil sind, also in der Länge wenig variieren. Ein weiterer Nachteil ist, daß aus Sicherheitsgründen ein großer Abstand zwischen dem Cartwheel und dem Sendesatelliten eingehalten werden muß. Dieser Abstand führt zu einem großen bistatischen Winkel und damit zu einem hohen Dopplerzentroiden, was die Signalverarbeitung sehr schwierig und kompliziert macht.

Neben der Along- und Across-Track Interferometrie bietet das Cartwheel-Konzept auch die Möglichkeit einer Superresolution. Dabei werden die aus dem örtlichen Versatz der Empfangssatelliten in Along-Track und Across-Track hervorgehenden Winkelunterschiede ausgenutzt, unter denen das Zielgebiet beobachtet wird. Diese Winkelunterschiede bewirken ein verschobenes Spektrum in Azimut- und Entferungsrichtung. Das Aneinanderfügen der beiden Spektren in Azimut und Entfernung führt zu einer erhöhten Signalbandbreite und damit zu einer verbesserten Auflösung in Azimut und Entfernung. Bei einem Cartwheel-Konzept mit drei Satelliten kann dabei die geometrische Auflösung bis zum Faktor 2 im Vergleich zu nur einem Empfänger-Satelliten gesteigert werden.

Die Nachteile der Zweipass-Interferometrie liegen in der temporalen Dekorrelation der beiden für die Interferometrie benötigten SAR-Bilder. Große Baselines und damit eine gute Höhenempfindlichkeit ist prinzipiell gegeben, die Höhengenauigkeit wird jedoch durch die temporale Dekorrelation wieder verschlechtert.

Die temporale Dekorrelation stellt bei der Einpass-Interferometrie auf Grund des gleichzeitigen Überflugs von zwei SAR-Empfängern kein Problem dar. Der Nachteil liegt aber in der begrenzten Länge der Baseline, was zu einer begrenzten Höhenempfindlichkeit führt. Die Einpass-Interferometrie wurde bei der SRTM-Mission mittels einer zweiten Empfängerantenne, die an einem 60 m langen Mast angebracht war, realisiert. Bereits bei einer Struktur dieser Länge traten Probleme mit Schwingungen auf, welche, auch wenn sie teilweise korrigiert werden, bei noch längeren Konstruktionen zu großen strukturellen und auch kostentechnischen Problemen führen.

Das Cartwheel-Konzept verbindet die Möglichkeit einer quasi beliebig großen Baseline in Across-Track für eine große Höhenempfindlichkeit mit der für die Einpass-Interferometrie typischen Vermeidung der temporalen Dekorrelation. Das Cartwheel-Konzept stellt bereits einen großen Fortschritt für die satellitengetragene SAR-Interferometrie dar. Aufgrund der Cartwheel-Konfiguration der SAR-Satelliten ergeben sich aber folgende neue Schwierigkeiten:

Die Orbit-Maintenance ist schwierig, da die Höhe und die Geschwindigkeit eines jeden Satelliten, der Teil des Cartwheel ist, ständig variiert. Auch der Aufbau der Cartwheel-Struktur dauert lange und ist mit Risiken verbunden. Wird ein fremder SAR-Satellit als Sender benutzt, so muß ein großer Sicherheitsabstand zum Sender eingehalten werden, um diesen nicht zu gefährden. Wird der Sendesatellit in das Cartwheel integriert, so ist eine mögliche Position im Zentrum der von den Empfangssatelliten gebildeten Cartwheel-Ellipse. Generell besteht wegen der schwierigen Orbit-Konstellation ein hohes Kollisionsrisiko zwischen den einzelnen Cartwheel-Satelliten untereinander und dem Sendesatelliten.

Aufgrund des großen Abstands zum Sendesatelliten (bei parasitärer Verwendung eines fremden Sendesatelliten) tritt ein großer Squintwinkel zwischen den Verbindungslinien vom Sender zum Ziel und von den Empfängern zum Ziel auf. Dieser große Squintwinkel verursacht Dopplerzentroiden in den einzelnen Datensätzen, welche bei mehreren Vielfachen der verwendeten PRF-Werte liegen. Dadurch ergeben sich große Schwierigkeiten in der interferometrischen Signalverarbeitung.

Der Along-Track-Abstand der Empfangssatelliten zueinander führt zu einem Squintwinkel-Unterschied, wodurch die zur Verfügung stehende Azimutbandbreite für interferometrische Anwendungen wesentlich eingeschränkt werden kann (beispielsweise bei Sende-Satelliten mit hoher Entfernungsbandbreite, da in diesem Fall prinzipiell eine große Across-Track Baseline möglich ist).

Die Across-Track- und die Along-Track-Interferometrie kann nicht gleichzeitig optimiert durchgeführt werden. Die Across-Track-Interferometrie kann durch die entsprechende Wahl des Durchmessers der Cartwheel-Ellipse optimiert werden. Dadurch wird aber auch die für die Along-Track-Interferometrie wichtige Along-Track-Baseline festgelegt. Eine günstige vertikale Baseline zum Beispiel für das C-Band liegt bei einem bis zu mehreren Kilometern. Dadurch ergeben sich maximale Along-Track-Baselines von ebenfalls mehreren Kilometern. Auf Grund der Bewegung der Empfänger-Satelliten auf der Cartwheel-Ellipse variieren sowohl die Across-Track als auch die Along-Track-Baseline.

Zur Vermeidung von Kalibrierungspunkten ist die Kalibrierung des Gesamtsystems über dem Meer erforderlich. Eine Kalibrierung über dem Meer wurde beispielsweise bei der SRTM-Mission durchgeführt. Ein für eine Kalibrierung geeigneter Along-Track-Abstand der Empfängersatelliten sollte unterhalb der sogenannten Korrelationszeit liegen.

Die Korrelationszeit ist eine aus der Rauigkeit der Meeresoberfläche abgeleitete Zeitdauer, innerhalb der zwei SAR-Aufnahmen stattfinden müssen, um eine brauchbare Kohärenz zu gewährleisten. Für das C-Band liegt diese Zeitdauer bei ungefähr 57 ms, was einer Along-Track-Separation von zwei Satelliten von ungefähr 400m bei ca. 800 km Orbithöhe entspricht. Aufgrund der Variation der Along-Track-Baseline mit Maxima von bis zu mehreren Kilometern bei optimierter Across-Track-Baseline des Cartwheels ist die Kalibrierung über dem Meer sehr schwierig zu realisieren.

Der Erfindung liegt die Aufgabe zugrunde, bei einer Satellitenkonfiguration mit mehreren Satelliten Baselines über den gesamten Orbit möglichst stabil zu halten. Ferner soll die Satellitenkonfiguration so ausgebildet sein, daß Along- und Across-Track-Interferometrie gleichzeitig ausgeführt und gleichzeitig optimiert werden können.

Gemäß der Erfindung ist diese Aufgabe durch eine Satellitenkonfiguration mit den Merkmalen des Anspruchs 1 oder 3 gelöst. Eine vorteilhafte Weiterbildung der Erfindung ist Gegenstand des Anspruchs 2.

Zur Lösung der Aufgabe sowie der beim Stand der Technik auftretenden Probleme sind gemäß der Erfindung bei einer Konstellation nach dem Oberbegriff des Anspruchs 1 mindestens drei SAR-Empfänger-Satelliten vorgesehen, die sich die sich mit gleicher Geschwindigkeit auf verschiedenen kreisförmigen Orbits bewegen, die in unterschiedlichen Ebenen liegen, d.h. verschiedene Inklinationen aufweisen, und deren Ascending Nodes, d.h. die Schnittpunkte der Äquatorebene und des jeweiligen Satellitenorbits, unterschiedlich sind, so dass die Maxima des horizontalen Across-Track-Versatzes zwischen jeweils zwei der Empfängersatelliten voneinander versetzt sind und sich über einen Orbitumlauf in der Länge periodisch variierende Baselines zwischen den Empfängersatelliten ergeben, von denen immer die längste zur Verfügung stehende Baseline für die Durchführung der Across-Track-Interferometrie ausgewählt wird.

Ferner sind zur Lösung der Aufgabe gemäß der Erfindung bei einer Satellitenkonfiguration nach dem Oberbegriff des Anspruchs 3 nur zwei Empfängersatelliten vorgesehen, deren Orbits elliptisch sind und in unterschiedlichen Ebenen liegen, d.h. Inklinationen aufweisen, und deren Ascending Nodes, d.h. die Schnittpunkte der Äquatorebene und des jeweiligen Satellitenorbits, unterschiedlich sind, dass die beiden Empfängersatelliten in den beiden elliptischen Orbits, deren Apogäen in unterschiedliche Richtungen zeigen, einen horizontalen und zugleich einen vertikalen Across-Track-Versatz aufweisen, und dass die Minima der vertikalen und horizontalen Across-Track-Baselines an unterschiedlichen Orbitpositionen auftreten, so dass jeder Punkt der Erdoberfläche aus zwei gegenüberliegenden Blickrichtungen mit einer ausreichenden effektiven Across-Track-Baseline abgebildet wird

Als Ascending Node wird der Schnittpunkt von Äquatorebene und Satellitenorbit auf dem Weg von der Südhalbkugel zur Nordhalbkugel bezeichnet. Dadurch ergibt sich ein horizontaler Across-Track-Versatz der Empfangssatelliten, welcher zweimal während eines Orbits zwischen einem maximalen Wert und Null variiert. Dabei tritt das Maximum des horizontalen Across-Track-Versatzes über dem Äquator auf und über den Polen schneiden sich die Orbits. Die Maxima des horizontalen Across-Track-Versatzes können auch über die Pole gelegt werden, wobei die Ascending Nodes identisch und die Inklination leicht unterschiedlich ist. Das Maximum kann auch an andere Positionen gelegt werden.

Gleichzeitig und unabhängig von der Across-Track-Baseline kann eine Along-Track-Baseline eingestellt werden, nämlich einfach durch einen kleinen zeitlichen Versatz der Empfängersatelliten in Flugrichtung.

Die Konstellation gemäß der Erfindung wird im folgenden auch als Cross-Track-Pendulum bezeichnet und bietet folgende Vorteile:

Eine zeitliche Dekorrelation ist aufgrund des quasi gleichzeitigen Überflugs aller Empfänger-Satelliten ausgeschlossen.

Eine in bezug auf die Anforderungen der Across-Track-Interferometrie beliebig lange Across-Track-Baseline kann gebildet werden, ohne auf strukturelle Beschränkungen einer zusammenhängenden Konstruktion Rücksicht nehmen zu müssen.

Ähnlich wie bei der Cartwheel-Konfiguration wird eine sehr stabile maximale Across-Track-Baseline erreicht. Die Variation des Maximums liegt bei der Verwendung von drei Satelliten nur zwischen 87% und 100% des absoluten Maximums.

Die Along-Track-Baseline kann im Gegensatz zur Cartwheel-Konfiguration unabhängig von der Across-Track-Baseline optimiert werden, zum Beispiel für Anwendungen in der Ozeanographie.

Die Orbit-Maintenance gestaltet sich aufgrund der gleichen Flughöhe und der gleichen Geschwindigkeit aller Empfangs- sowie des Sendesatelliten sehr einfach. Dadurch ist das Kollisionsrisiko im Vergleich zur Cartwheel-Konfiguration stark vermindert.

Der Along-Track Abstand zwischen einem fremden oder einem zum Cross-Track-Pendulum gehörenden Sendesatelliten kann auf Grund des geringeren Kollisionsrisikos wesentlich geringer als beim Cartwheel-Konzept liegen. Daraus ergibt sich die Lösung des Problems mit hohen Squintwinkeln, wie sie beim Cartwheel-Konzept auftreten. Somit gestaltet sich die interferometrische Signalverarbeitung der SAR-Daten wesentlich einfacher und kann mit Standardverfahren der SAR-Interferometrie bewältigt werden.

Durch die Unabhängigkeit der Optimierung von Across- und Along-Track-Interferometrie können mehrere Missionen parallel durchgeführt werden. Zum Beispiel kann mit Across-Track-Interferometrie ein globales Geländemodell erstellt werden und gleichzeitig kann Along-Track-Interferometrie zur Geschwindigkeitsmessung von Meeresströmungen in der Ozeanbeobachtung oder Superresolution durchgeführt werden.

Zur Einhaltung der Satellitenbahnen mit leicht unterschiedlicher Inklination wird zusätzlicher Treibstoff benötigt. Dies stellt jedoch keine technologische Einschränkung dar. Beispielsweise benötigt eine Konfiguration von Empfangs-Satelliten für ENVISAT nur ca. 1% der Empfangs-Satellitenmasse pro Jahr an Treibstoff. Als Vergleich sei das Beispiel der Cartwheel-Mission genannt, bei der ca. 4.5% der Empfangs-Satellitenmasse (ca. 2 Jahre Missionsdauer) an Treibstoff für die Bahnsteuerung der gesamten Mission verbraucht wird.

Nachfolgend wird die Erfindung anhand der Zeichnungen im einzelnen erläutert. Es zeigen:
- Fig.1: die bekannte Geometrie eines interferometrischen SAR-Systems zur Höhenmessung mittels einer Across-Track-Basline;
- Fig.2: die bekannte Geometrie eines interferometrischen SAR-Systems mit einer Along-Track-Baseline;
- Fig.3: eine interferometrische Cartwheel-Konfiguration mit einem SAR-Sendesatelliten und drei SAR-Empfangssatelliten, welche das Cartwheel um ein virtuelles Cartwheel-Zentrum bilden;
- Fig.4: ein Ausführungsbeispiel einer Orbitbahn von drei Empfängersatelliten der erfindungsgemäßen Konfiguration;
- Fig.5: eine Darstellung einer Variation des Across-Track-Versatzes für drei um ein Drittel Orbit versetzte Satelliten um eine Orbitumlaufbahn gemäß der Konfiguration in Fig.4;
- Fig.6: die sich für das Beispiel mit drei Empfangssatelliten ergebenden drei verschiedenen Across-Track Baselines in der Variation über einen Orbitumlauf gemäß der Konfiguration von Fig.4;
- Fig.7: ein Ausführungsbeispiel der Orbitbahnen nur von zwei Empfängersatelliten mit vertikalem und horizontalem Across-Track-Versatz, und
- Fig.8: fiktive Across-Track Baselines für eine Konfiguration mit zwei Satelliten bei vertikalem und horizontalem Across-Track-Versatz.

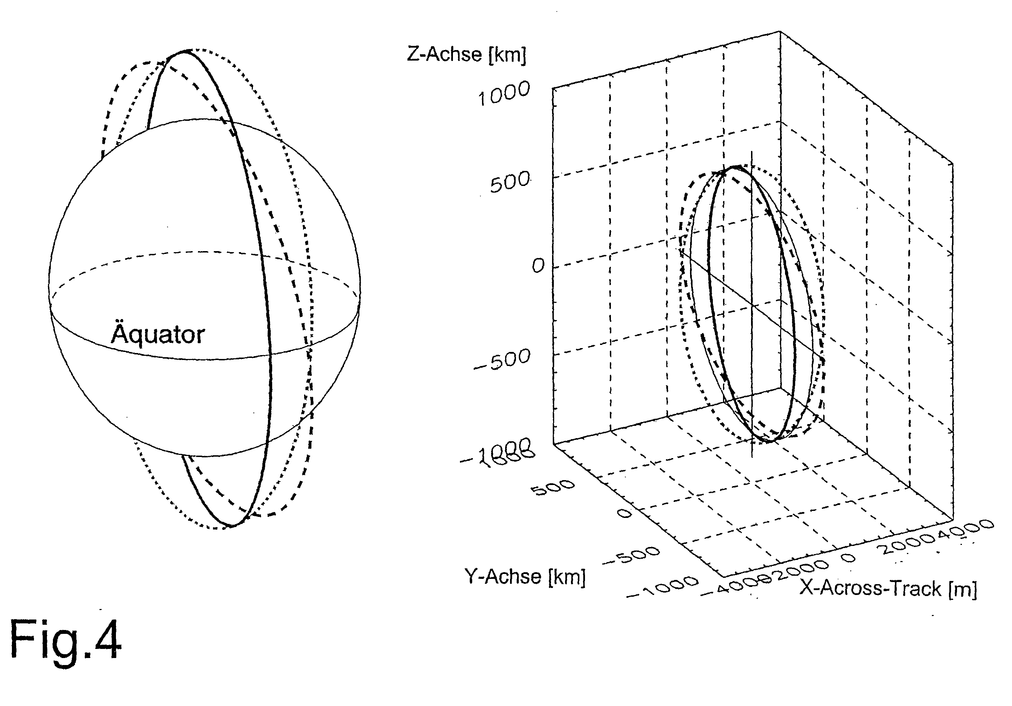

Fig.4 zeigt links eine grundlegende Geometrie einer erfindungsgemäßen Satellitenkonfiguration mit drei (3) im einzelnen nicht dargestellten Empfangssatelliten, was nur durch deren Satellitenbahnen veranschaulicht ist. Ein nicht dargestellter Sender hat in diesem Beispiel, wie die Empfangssatelliten, eine kreisförmige Bahn, aber im Gegensatz zu den Empfangssatelliten keinen Across-Track-Versatz. In Fig.4 links ist der horizontale Across-Track Versatz zur Verdeutlichung der Satellitenbahnen nicht maßstabgerecht dargestellt.

In Fig.4 rechts ist die Bahn der Empfangssatelliten dargestellt, wobei exemplarisch eine Orbithöhe von 800 km und ein horizontaler, nicht maßstabgerecht wiedergegebener Across-Track-Versatz von 600 m angenommen wurde. Es wurden drei Satelliten angenommen, wobei aber auch eine andere Anzahl (2 bis N) verwendet werden kann. Bei zwei Satelliten wird eine günstige Baseline nur über bestimmten Breitengraden erreicht. Bei drei und mehr Satelliten wird jedoch eine günstige Baseline über allen Breitengraden erreicht. Der Along-Track Versatz sollte aus Sicherheitsgründen mindestens 100 m betragen, womit noch eine sehr gute Korrelation über dem Meer für Kalibrierungszwecke gegeben ist.

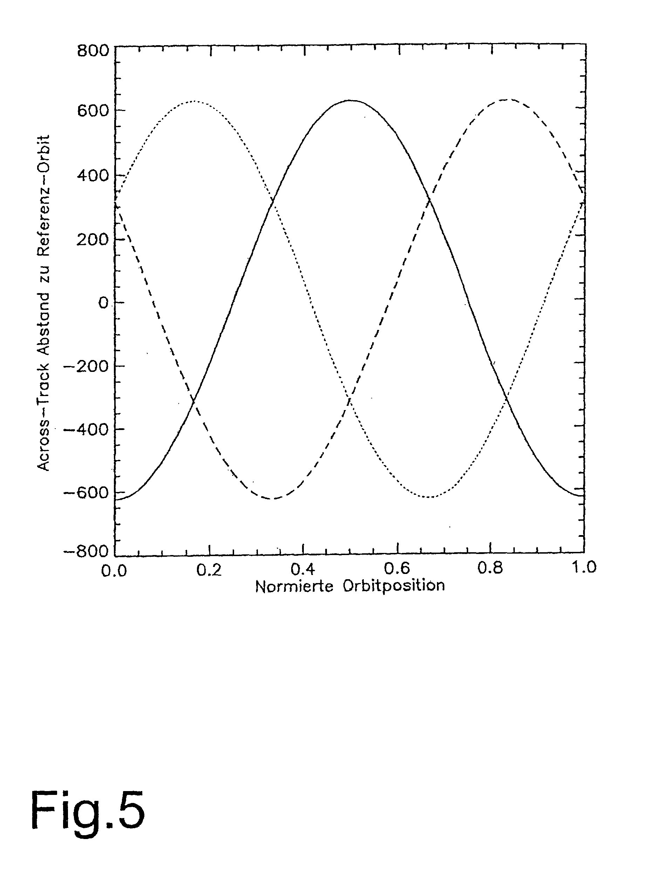

Der Verlauf des horizontalen Across-Track-Versatzes eines Satelliten ist in guter Näherung eine sinusförmige Kurve, wie in Fig.5 dargestellt wird. Die Periode der Sinuskurve entspricht einem Orbitumlauf, wobei der relative Phasenversatz zwischen den Satelliten jeweils ein Drittel eines Orbitumlaufs (d.h. 120 Grad) beträgt. Die für die Darstellung verwendete Näherung ist ausreichend, da die Satellitenbahnen in der Fernerkundung eine Inklination nahe bei 90 Grad haben, und weil der Across-Track Versatz klein ist (ca. einige 100 m bis wenige 10 km, je nach SAR-Systemauslegung). Auch bei noch größerem Across-Track-Versatz bleiben die Vorteile der neuen Konfiguration gegenüber der Cartwheel-Konfiguration erhalten.

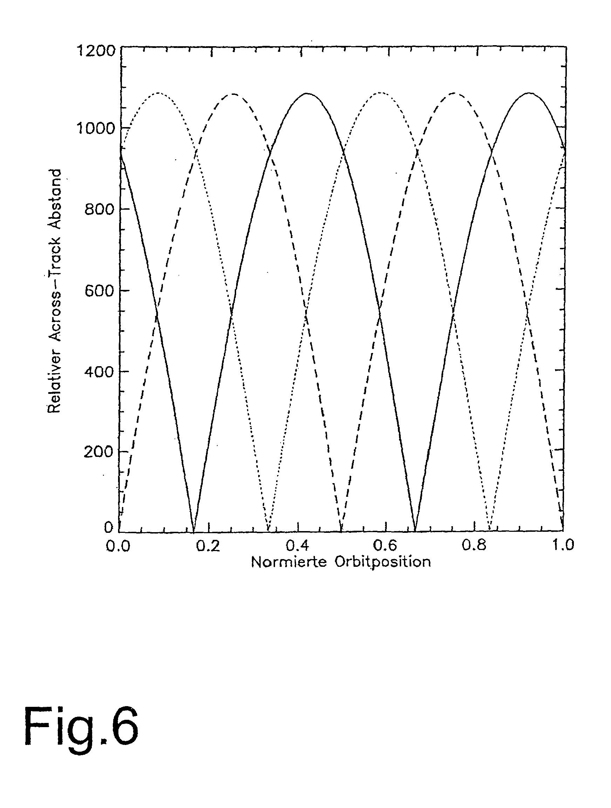

In Fig.6 sind die Across-Track Baselines zwischen drei beispielhaft angenommenen Empfangssatelliten der erfindungsgemäßen Konfiguration dargestellt. Für die Across-Track-Interferometrie wird grundsätzlich immer die größte zur Verfügung stehende Baseline ausgewählt. Aus Fig.6 ist ersichtlich, daß bei drei Empfangssatelliten immer mindestens 87 % der größten auftretenden Baseline als maximale Baseline zur Verfügung steht. Andere kleinere Baselines können beispielsweise zur Unterstützung des Unwrapping-Verfahrens verwendet werden.

Weitere Ausführungsbeispiele für Konfigurationen mit horizontalem Across-Track Versatz werden nachstehend angegeben.
a) Anstatt eines reinen Empfangssatelliten wird ein Sende/Empfangssatellit verwendet. In diesem Fall ist kein fremder Sendesatellit notwendig.
b) Es wird ein reiner Sendesatellit verwendet, welcher speziell für das Cross-Track-Pendulum ausgelegt ist.
c) Es werden unterschiedliche Amplituden des Across-Track-Versatzes beim Pendulum, zum Beispiel für Superresolution verwendet.
d) Es werden drei Satelliten mit gleichen Amplituden des Across-Track-Versatzes des Pendulums, aber mit unterschiedlichem Along-Track-Versatz, beispielsweise zur Lösung der Ambiguities bei der Messung von Meeresströmungen verwendet.
e) Zur Along- und/oder Across-Track-Interferometrie sind andere Konfigurationen mit einem bis N Empfangssatelliten und/oder Sendesatelliten und/oder Sende/Empfangssatelliten mit Verwendung eines Across-Track-Versatzes mit gleicher oder unterschiedlicher Amplitude möglich.
f) Zur tomografischen Abbildung können auch Konfigurationen mit einem bis N Empfangssatelliten und/oder Sendesatelliten und/oder Sende/Empfangssatelliten mit Verwendung eines Across-Track-Versatzes mit gleicher oder unterschiedlicher Amplitude vorgesehen werden.
g) Es können auch Konfigurationen mit einem bis N Empfangssatelliten und/oder Sendesatelliten und/oder Sende/Empfangs-satelliten mit Verwendung eines Across-Track-Versatzes mit gleicher oder unterschiedlicher Amplitude für Superresolution vorgesehen werden.
h) Zur Kombination der unter e) bis g) angeführten Anwendungen können Konfigurationen mit einem bis N Empfangssatelliten und/oder Sendesatelliten und/oder Sende/Empfangssatelliten mit Verwendung eines Across-Track-Versatzes mit gleicher oder unterschiedlicher Amplitude vorgesehen werden.

Zusätzlich zu den Konfigurationen mit horizontalem Across-Track-Versatz sind diverse Kombinationen mit einem vertikalen Bahnversatz denkbar. Dieser vertikale Across-Track Versatz führt zu einer Exzentrizität der Orbitbahn der Empfangssatelliten. Hierdurch ergibt sich jedoch aufgrund der Geschwindigkeitsvariation der Empfangssatelliten zwangsläufig ein von der Orbitposition abhängiger Along-Track Versatz.

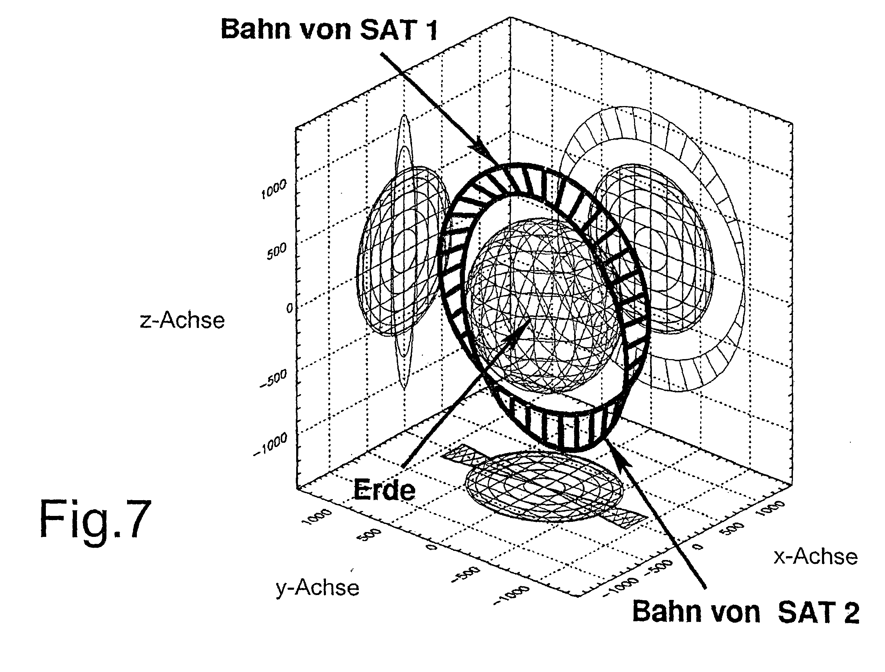

Im folgenden werden einige Ausführungsbeispiele dazu beschrieben. In Fig.7 ist die grundlegende Geometrie einer Konfiguration mit zwei Empfangssatelliten SAT1 und SAT2 dargestellt, bei der die Satellitenbahnen wie in Fig.4 in unterschiedlichen Ebenen liegen, d.h. leicht verschiedene Inklinationen und/oder unterschiedliche Ascending Nodes aufweisen. Hierdurch ergibt sich eine horizontale Across-Track Baseline, deren Länge abhängig von der Orbitposition periodisch schwankt. Dies ist in Fig.7 durch eine Projektion auf die xy-Ebene veranschaulicht.

Im Gegensatz zu Fig.4 bewegen sich die Satelliten in Abbildung 7 jedoch zusätzlich auf elliptischen Orbits. Zeigen die Orbits unterschiedliche Exzentrizitäten und/oder die Apogäen (Punkte mit maximaler Erdferne) in unterschiedliche Richtungen, so ergibt sich abhängig von der Orbitposition zusätzlich eine vertikale Across-Track Baseline, wie sie in der yz-Ebene dargestellt ist.

Wird nun dafür gesorgt, daß die Minima der vertikalen und horizontalen Across-Track Baselines an unterschiedlichen Positionen auftreten (in Fig.7 wurde hierfür ein Versatz von 90° gewählt), so wird an jeder Orbitposition ein nicht verschwindender Across-Track Versatz bei der Verwendung von nur zwei Satelliten erhalten. Beispielsweise bleibt für die Konfiguration in Fig.7 die Länge der Across-Track Baseline (nahezu) konstant, da die Amplituden des horizontalen und vertikalen Across-Track Versatzes gleich gewählt wurden. Zur Verdeutlichung ist in Fig.7 der sich zu jedem Zeitpunkt ergebende Across-Track Versatz mit dicken Strichen eingezeichnet.

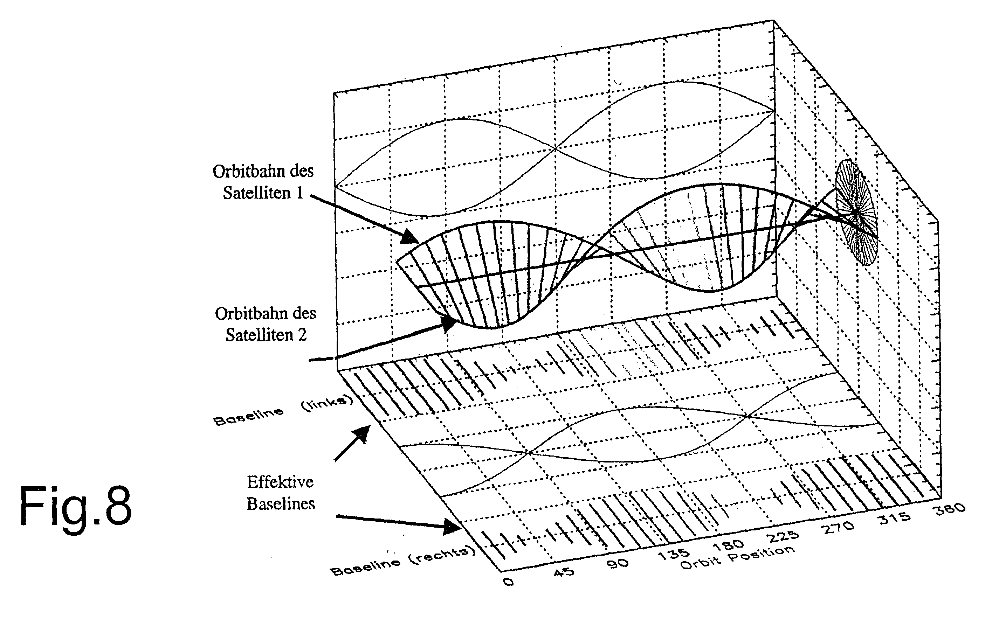

Entscheidend für die interferometrische Abbildung ist jedoch nicht der Across-Track Versatz der Satelliten, sondern die Länge der effektiven Baseline, d.h. der Abstand zwischen den Satelliten, der sich nach einer Orthogonalprojektion entlang der Blickrichtung des Radars ergibt. Hierzu sind in Fig.8 für einen kompletten Orbitumlauf die effektiven Across-Track Baselines eingezeichnet, die für einen Blickwinkel von entweder -45° (links unten) oder +45° (rechts unten) erhalten werden. Wie zu erkennen ist, schwankt die Länge der effektiven Baseline sinusförmig als Funktion der Orbitposition. Dabei sind die Baselines der linken und rechten Seite um 90° in ihrer Phase verschoben.

Wird nun eine Sende- und Empfangskonfiguration gewählt, die abhängig von der Orbitposition zur linken oder zur rechten Seite blicken kann (z.B. Radarsat-II - ein neuer Satellit, der im Jahr 2003 gestartet werden soll - in Verbindung mit geeignet rotierenden passiven Mikrosatelliten), so ergibt sich eine effektive Across-Track Baseline, die immer mindestens 71% ihrer maximalen Länge beträgt. Damit ist eine interferometrische Abbildung der gesamten Erdoberfläche mit nur zwei Empfangssatelliten möglich. Wird ferner berücksichtigt, daß die Nord- und Südhalbkugeln der Erde bei einem Orbitumlauf jeweils zweimal abgebildet werden, es prinzipiell aber ausreichen würde, diese jeweils nur einmal abzubilden, so genügt eine Konfiguration mit nur einer Blickrichtung (entweder links oder rechts) für eine vollständige Abbildung der Erdoberfläche.

Beispielsweise kann für die rechtsblickende Konfiguration in Fig.8 die Zuordnung [0°, 90°, 180°, 270°, 360°] = [Äquator, Südpol, Äquator, Nordpol, Äquator] gewählt werden. Dadurch wird die Südhalbkugel in der aufsteigenden Bahn zwischen 90° und 180° und die Nordhalbkugel in der absteigenden Bahn zwischen 270° und 360° mit einer effektiven Baseline abgebildet, die immer mindestens 71% ihrer maximalen Länge beträgt. Ein weiterer Vorteil dieser speziellen Anordnung ist, dass für den horizontalen Across-Track Versatz kein zusätzlicher Treibstoff benötigt wird, da sich die beiden Orbits zwar in ihren Ascending Nodes, nicht jedoch in ihren Inklinationen unterscheiden.

Eine globale Abdeckung der Erde mit ausreichender Baseline ist auch bei anderen Konfigurationen mit zwei Empfangssatelliten möglich mit einem Blickwinkel auf nur eine Seite (z.B. ein rein vertikaler oder ein rein horizontaler Versatz). Allerdings wird hierbei auf die Möglichkeit verzichtet, ein und denselben Punkt aus zwei gegenüberliegenden Richtungen, d.h. mit zwei Blickwinkeln, aufzunehmen. Dies ist insbesondere bei großen Geländesteigungen von Interesse. Weitere Satellitenkonfigurationen mit einer Kombination des horizontalen und vertikalen Across-Track-Versatzes sind möglich, beispielsweise für Super-Resolution und/oder Tomographie. Ein Vorteil einer solchen Kombination ist, dass das Verhältnis der Baselines für alle Orbitpositionen konstant gehalten werden kann.

Weitere Anwendungsmöglichkeiten einer solchen Konfiguration sind Tomografie und die Superresolution, wobei erstere eine Anzahl an Empfangssatelliten im allgemeinen von mehr als 3 erfordert.

Für die Superresolution sind zwei bis drei Satelliten ausreichend, falls das Geländemodell (DEM) des überflogenen Gebiets bereits bekannt ist. Falls das DEM noch nicht bekannt ist, können zwei Pendulum-Konfigurationen miteinander kombiniert werden, wobei der Across-Track-Versatz für das Pendulum zur DEM-Generierung etwa ein Drittel der kritischen Baseline beträgt, während der Across-Track-Versatz für die Superresolution mit der kritischen Baseline vergleichbar ist.

Für die Tomografie können sogar mehr als fünf Empfangssatelliten mit unterschiedlichem horizontalen und/oder vertikalen Across-Track-Versatz verwendet werden, damit eine gute Höhenauflösung erreicht wird. Auch mehrere Überflüge können zur Erstellung einer tomografischen Abbildung verwendet werden, wobei die zeitliche Dekorrelation um Größenordnungen besser ist, als bei der Multi-Pass-Tomografie mit nur einem Empfangssatelliten.

## Patentansprüche

1. Satellitenkonfiguration für ein Radarsystem mit synthetischer Apertur zur interferometrischen und/oder tomographischen Abbildung der Erdoberfläche unter Verwendung eines satellitengetragenen Senders und mehrerer jeweils einen Empfänger tragenden Empfängersatelliten, die sich auf jeweils einem Orbit bei über den Orbitumlauf variierendem horizontalen Across-Track-Versatz bewegen und von denen einer auch den Sender tragen kann, wobei zwischen den einzelnen Empfängersatelliten außerdem zusätzlich zum horizontalen Across-Track-Versatz ein horizontaler Along-Track-Abstand eingestellt wird, der unabhängig von deren Orbitpositionen konstant ist, **dadurch gekennzeichnet, dass** mindestens drei Empfängersatelliten vorgesehen sind, die sich mit gleicher Geschwindigkeit auf verschiedenen kreisförmigen Orbits bewegen, die in unterschiedlichen Ebenen liegen, d.h. verschiedene Inklinationen aufweisen, und deren Ascending Nodes, d.h. die Schnittpunkte der Äquatorebene und des jeweiligen Satellitenorbits, unterschiedlich sind, so dass die Maxima des horizontalen Across-Track-Versatzes zwischen jeweils zwei der Empfängersatelliten voneinander versetzt sind und sich über einen Orbitumlauf in der Länge periodisch variierende Baselines zwischen den Empfängersatelliten ergeben, von denen immer die längste zur Verfügung stehende Baseline für die Durchführung der Across-Track-Interferometrie ausgewählt wird.

2. Satellitenkonfiguration nach Anspruch 1, **dadurch gekennzeichnet, dass** drei Empfängersatelliten in drei kreisförmigen Orbits vorgesehen sind, die in drei unterschiedlichen Ebenen liegen, d.h. verschiedene Inklinationen aufweisen, dass die Ascending Nodes der drei Empfängersatelliten unterschiedlich sind, so dass die Maxima des horizontalen Across-Track-Versatzes zwischen jeweils zwei der drei Empfängersatelliten um ein Drittel des Orbitumlaufs voneinander versetzt sind und sich über einen Orbitumlauf in der Länge periodisch variierende Baselines zwischen den drei Empfängersatelliten ergeben, von denen immer die längste zur Verfügung stehende Baseline für die Durchführung der Across-Track-Interferometrie ausgewählt wird.

3. Satellitenkonfiguration für ein Radarsystem mit synthetischer Apertur zur interferometrischen und/oder tomographischen Abbildung der Erdoberfläche unter Verwendung eines satellitengetragenen Senders und mehrerer jeweils einen Empfänger tragenden Empfängersatelliten, die sich auf jeweils einem Orbit bei über den Orbitumlauf variierendem horizontalen Across-Track-Versatz bewegen und von denen einer auch den Sender tragen kann, **dadurch gekennzeichnet, dass** nur zwei Empfängersatelliten vorgesehen sind, deren Orbits elliptisch sind und in unterschiedlichen Ebenen liegen, d.h. Inklinationen aufweisen, und deren Ascending Nodes, d.h. die Schnittpunkte der Äquatorebene und des jeweiligen Satellitenorbits, unterschiedlich sind, dass die beiden Empfängersatelliten in den beiden elliptischen Orbits, deren Apogäen in unterschiedliche Richtungen zeigen, einen horizontalen und zugleich einen vertikalen Across-Track-Versatz aufweisen, und dass die Minima der vertikalen und horizontalen Across-Track-Baselines an unterschiedlichen Orbitpositionen auftreten, so dass jeder Punkt der Erdoberfläche aus zwei gegenüberliegenden Blickrichtungen mit einer ausreichenden effektiven Across-Track-Baseline abgebildet wird.

## Claims

1. A satellite configuration for a synthetic aperture radar (SAR) system for interferometric and/or tomographic mapping the earth's surface by using a satellite-platformed transmitter and several receiver satellites each platforming a receiver and each orbiting with a horizontal across-track shift varying over the orbit and of which one may also platform the transmitter, whereby between the individual receiver satellites in addition to the horizontal across-track shift a horizontal along-track separation is adjustable to be constant irrespective of their orbital position, **characterized in that** at least three receiver satellites are provided, orbiting at the same velocity in different circular orbits located in differing planes, i.e. differing in inclination and whose ascending nodes, i.e. the points of intersection of the equatorial plane and the satellite orbit in each case, differing, so that the maxima of the horizontal across-track shift between two each of the receiver satellites are each shifted relative to the other and result in baselines varying periodically in length over an orbit between the receiver satellites, of which it is always the longest baseline available that is selected for implementing across-track interferometry.

2. The satellite configuration as set forth in claim 1, **characterized in that** three receiver satellites are provided in three circular orbits located in three different planes, i.e. differing in inclination, that the ascending nodes of the three receiver satellites differ, so that the maxima of the horizontal across-track shift between two each of the three receiver satellites are each shifted relative to the other by a third of the orbit and result in baselines varying periodically in length over an orbit between the three receiver satellites, of which it is always the longest baseline available that is selected for implementing across-track interferometry.

3. A satellite configuration for a synthetic aperture radar (SAR) system for interferometric and/or tomographic mapping the earth's surface using a satellite-platformed transmitter and several receiver satellites each platforming a receiver and each orbiting with a horizontal across-track shift varying over the orbit and of which one may also platform the transmitter, **characterized in that** only two receiver satellites are provided, whose orbits are elliptical and located in differing planes, i.e. differing in inclination and whose ascending nodes, i.e. the points of intersection of the equatorial plane and the satellite orbit in each case, differ, that the two receiver satellites in the two elliptical orbits, whose apogees point in different directions, feature a horizontal and simultaneously a vertical across-track shift, and that the minima of the vertical and horizontal across-track baselines occur at differing orbit positions, so that each point of the earth's surface is mapped from two opposing viewing directions with a sufficiently effective across-track baseline.

## Revendications

1. Configuration de satellite pour un système radar à ouverture synthétique pour imagerie par interférométrie et/ou tomographie de la surface de la Terre en utilisant un émetteur embarqué et plusieurs satellites récepteurs transportant respectivement un récepteur, qui se déplacent respectivement sur une orbite avec une déviation horizontale de trajectoire transversale variable dans le trajet orbital et dont l'un d'entre eux peut également transporter l'émetteur, moyennant quoi, en supplément de la déviation horizontale de trajectoire transversale (Across-Track), une distance longitudinale (Along-Track) horizontale entre les différents satellites récepteurs est en outre réglée, qui est constante indépendamment de leurs positions orbitales, **caractérisée en ce qu'**il est prévu au moins trois satellites récepteurs, qui se déplacent à vitesse égale sur des orbites circulaires différentes, lesquelles se situent à des plans différents, c'est-à-dire ont des inclinaisons différentes et dont les noeuds ascendants, c'est-à-dire les points de croisement entre le plan équatorial et l'orbite satellitaire respective, sont distincts, de sorte que les maxima de déviation horizontale de trajectoire transversale entre respectivement deux satellites récepteurs sont décalés les uns par rapport aux autres, et que des Baselines (intertraces orbitales) variant périodiquement en longueur se produisent dans le trajet orbital entre les satellites récepteurs, parmi lesquelles la Baseline (intertrace orbitale) la plus longue à disposition est choisie pour l'exécution de l'interférométrie en route transversale.

2. Configuration de satellite selon la revendication 1, **caractérisée en ce que** trois satellites récepteurs sont prévus dans trois orbites circulaires, qui se situent à des plans différents , c'est-à-dire ont des inclinaisons différentes, **en ce que** les noeuds ascendants des trois satellites récepteurs sont distincts, de sorte que les maxima de déviation horizontale de trajectoire transversale sont décalés d'un tiers du trajet orbital entre respectivement deux des trois satellites récepteurs et que des Baselines (intertraces orbitales) variant périodiquement en longueur dans un trajet orbital se produisent entre les trois satellites récepteurs, parmi lesquels la Baseline (intertrace orbitale) la plus longue à disposition est toujours choisie pour l'exécution de l'interférométrie en route transversale.

3. Configuration de satellite pour un système radar à ouverture synthétique pour imagerie par interférométrie et/ou tomographie de la surface de la Terre en utilisant un émetteur embarqué et plusieurs satellites récepteurs transportant respectivement un récepteur, lesquels se déplacent respectivement sur une orbite avec une déviation horizontale de trajectoire transversale variable dans le trajet orbital et dont l'un d'entre eux peut également transporter l'émetteur, **caractérisée en ce qu'**il est prévu seulement deux satellites récepteurs, dont les orbites sont elliptiques et se situent à des plans différents, c'est-à-dire ont des inclinaisons, et dont les noeuds ascendants, c'est-à-dire les points de croisement entre le plan équatorial et l'orbite satellitaire respective sont distincts, **en ce que** les deux satellites récepteurs dans les deux orbites elliptiques, dont les apogées sont donnés dans des directions différentes, présentent à la fois une déviation horizontale et une déviation verticale de trajectoire transversale, de sorte que chaque point de la surface de la Terre soit représenté à partir de deux directions de visée opposées avec une Baseline (intertrace orbitale) de route transversale effective suffisante.
